# EUROPÄISCHE PATENTSCHRIFT

(11) **EP 0 681 180 B1**
(45) Veröffentlichungstag und Bekanntmachung des Hinweises auf die Patenterteilung: **03.03.2004**
(21) Anmeldenummer: 94106918.9
(22) Anmeldetag: 03.05.1994
(51) Int. Cl.: G01N 27/60

(54) **Vorrichtung zur Polyelektrolytbestimmung**
Device for the determination of polyelectrolytes
Appareil pour la détermination de polyélectrolytes

(43) Veröffentlichungstag der Anmeldung: 08.11.1995
(73) Patentinhaber: MÜTEK ANALYTIC GmbH, D-82211 Herrsching (DE)
(72) Erfinder: Hochgraeber, Hermann, D-82229 Seefeld (DE); Pickelmann, Lutz, Dr., D-81673 München (DE)
(74) Vertreter: Bohnenberger, Johannes, Dr.

(56) Entgegenhaltungen:
- WO-A-91/14940
- PATENT ABSTRACTS OF JAPAN vol. 18, no. 43 (C-1156) 24. Januar 1994 & JP-A-52 069 449 (MIKAMI NOBUO)
- ANALYSIS INSTRUMENTATION, Bd.4, Mai 1966 Seiten 181 - 198 WALTER F. GERDES 'A new instrument- the Streaming Current Detector'

## Beschreibung

Die Erfindung betrifft eine Vorrichtung zur Polyelektrolytbestimmung nach dem Oberbegriff des Patentanspruches 1.

Aus der US-Druckschrift "12th Material ISA Analysis Instr. Symposium, Houston, Texas, 1966: Vol. 4, Seiten 181-198" ist eine Vorrichtung zur Polyelektrolytbestimmung bekannt, mittels derer Proben für die Bestimmung des Polyelektrolytverbrauchs in einem Prozeß von Hand in das Probengefäß gegeben werden und ein im Probengefäß angeordneter Kolben bewegt wird. Dadurch entsteht ein Strömungspotential, das über Elektroden abgegriffen und gemessen wird. Gleichzeitig wird eine Titration durchgeführt. Nach jedem Meßvorgang müssen das Probengefäß und der Kolben auseinandergenommen und gereinigt werden.

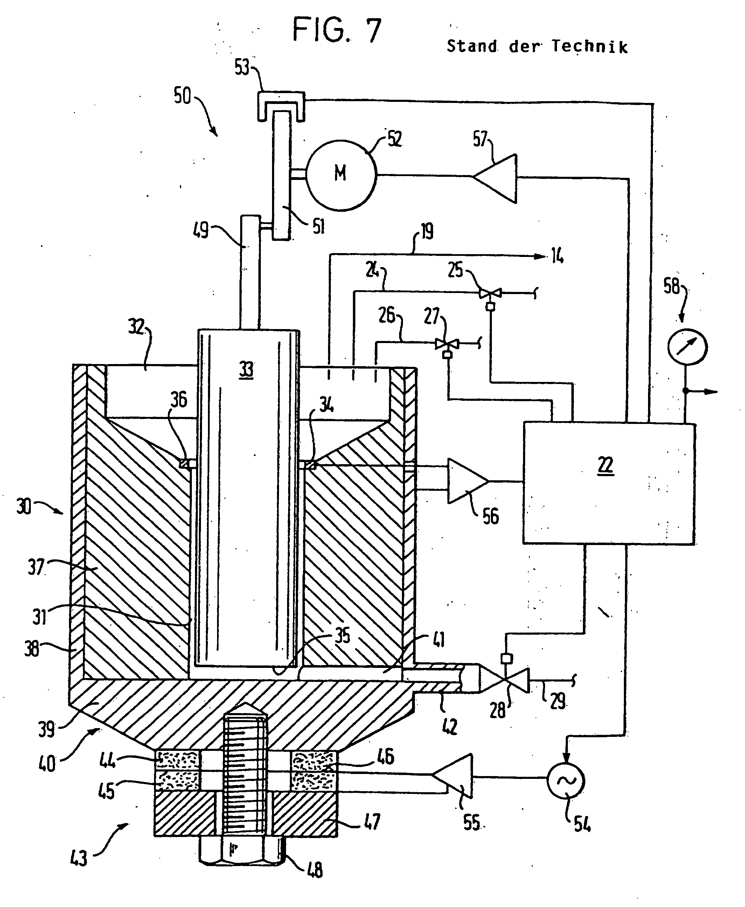

Aus der DE 40 08 916 C1 ist eine Vorrichtung der eingangs genannten Art bekannt, bei welcher eine automatisierte Polyelektrolytbestimmung durchgeführt werden kann. Diese bekannte Vorrichtung wird nachfolgend im Detail anhand der beiliegenden Figur 7 erläutert.

Fig. 7 zeigt einen Teil-Längsschnitt der bekannten Vorrichtung, bei welcher ein Probengefäß 30 vorgesehen ist, welches einen inneren Isolierblock 37 und ein äußeres Metallteil, bestehend aus einem Außenmantel 38 und einem Boden 39 aufweist. Der Isolierblock 37 weist eine im wesentlichen mittige Bohrung auf, welche einen zylindrischen Abschnitt 31 bildet, der nach oben in einem ebenfalls zylindrischen Einfüllabschnitt 32 größeren Durchmessers übergeht. An seinem oberen Ende ist im zylindrischen Abschnitt 31 eine Ringkerbe 36 vorgesehen, in welcher eine ringförmige erste Elektrode 34 aus einem korrosionsfesten Metall fest angebracht ist. Der Boden 39 schließt den zylindrischen Abschnitt 31 an seinem unteren Ende ab und bildet an dieser Stelle eine zweite Elektrode 35.

Die Elektroden 34 und 35 sind mit den Eingängen eines Verstärkers 56 verbunden, dessen Ausgang in einen Eingang einer Steuerung 22 geführt ist.

Der Boden 39 geht einstückig in einen Hornabschnitt 40 über, auf dessen Enden zwei übereinandergestapelte ringförmige Piezoschwinger mittels eines Schraubbolzens 48 und eines zwischengesetzten Gegenrings 47 gepreßt sind. Zwischen den Piezoringen 44, 45 ist eine Elektrode 46 angeordnet. Durch diese Anordnung sind die äußeren Ringflächen der beiden Piezoringe 44, 45 über den Schraubbolzen 48 elektrisch leitend verbunden, so daß die beiden Piezoringe 44, 45 elektrisch parallel und mechanisch in Reihe geschaltet sind. Zur elektrischen Ansteuerung, die über die Elektrode 46 und die Metallteile 39, 40, 47 und 48 erfolgt, ist ein Ultraschallgenerator 54 mit nachgeschaltetem Treiberverstärker 55 vorgesehen. Die Anordnung ist elektrisch rückgekoppelt. Dadurch soll eine selbsttätige Einstellung der Schwingfrequenz auf einen optimalen Wert erfolgen.

In der unteren Endfläche des Isolierblocks 37 ist eine Kerbe 41 radial nach außen gerichtet angebracht, so daß eine Rohrleitung mit einem tunnelartigen Querschnitt entsteht, die einerseits von den Kerbenwänden, andererseits vom Boden 39 gebildet wird. An der Stelle, an welcher die Kerbe 41 auf den Außenmantel 38 trifft, ist in diesem eine Bohrung angebracht, welche in einen Rohrstutzen 42 übergeht. Der Rohrstutzen 42 ist über eine Leitung mit einem Auslaßventil 28 verbunden, über welches der Rohrstutzen 42 mit einer Ablaßleitung 29 verbindbar ist. Das Ablaßventil 28 ist über eine Steuerleitung mit der Steuerung 22 verbunden.

Im zylindrischen Abschnitt 31 steckt ein Kolben 33 aus isolierendem Material, der so dimensioniert ist, daß ein sehr enger Spalt (wenige Zehntel Millimeter) zwischen der Kolbenaußenfläche und dem zylindrischen Abschnitt 31 des Isolierkörpers 39 gebildet ist. Der Kolben 33 weist eine plane Endfläche auf und ist an der gegenüberliegenden Seite über einen Schaft 49 mit einer Kurbel 51 verbunden, die über einen Elektromotor 52 drehbar ist. An der Kurbel 51 ist ein Drehwinkelgeber 53 angebracht, über welchen der Drehwinkel der Kurbel 51 und damit die Hubhöhe des Kolbens 33 abtastbar und der Steuerung 22 zuführbar sind. Der Elektromotor 52 ist über einen Treiberverstärker 57 von der Steuerung 22 so ansteuerbar, daß der so gebildete Antrieb 50 für den Kolben 33 sehr exakt gesteuert werden kann.

In den Einfüllabschnitt 32 mündet eine Spülleitung 26, die über ein von der Steuerung 22 ansteuerbares Magnetventil 27 mit einem Behälter mit destilliertem Wasser in Verbindung bringbar ist. Weiterhin mündet eine Titrierleitung 24 in den Einfüllabschnitt 32, welche über ein von der Steuerung 22 ansteuerbares Magnetventil 25 mit einem Vorratsbehälter für den Titer in Verbindung bringbar ist. Schließlich mündet eine Leitung 19 in den Einfüllabschnitt 32, über welche eine Probenflüssigkeit in den Einfüllabschnitt 32 einfüllbar ist. Auch dieses Einfüllen einer Probe geschieht unter Kontrolle durch die Steuerung 22.

Die Arbeitsweise der in Fig. 7 gezeigten bekannten Vorrichtung wird im folgenden beschrieben.

Es wird eine definierte Menge einer Probe durch die Leitung 19 in den Einfüllabschnitt 32 eingeführt. Der Kolben 33 wird über den Antrieb 50 auf- und abbewegt. Das so entstehende Strömungspotential wird über die Elektroden 34, 35 und den Verstärker 56 der Steuerung 22 zugeführt, die den Meßwert verarbeitet und über eine Meßeinrichtung 58 anzeigt bzw. protokolliert. Gleichzeitig wird über die Leitung 24 titriert.

Nach Durchführung der Messung wird das Ventil 28 bei jeder Abwärtsbewegung des Kolbens 33 geöffnet und bei jeder Aufwärtsbewegung geschlossen. Dadurch wird die gesamte, in der Vorrichtung enthaltene Flüssigkeit in die Leitung 29 gepumpt und kann verworfen werden. Nach einer hinreichenden Pumpdauer, wenn also keine wesentlichen Probenmengen mehr in der Vorrichtung enthalten sind, wird das Spülventil 27 geöffnet, so daß Spülflüssigkeit über die Leitung 26 in den Einfüllabschnitt 32 eingeführt werden kann. Währenddessen wird der Kolben 33 nach wie vor auf- und abbewegt und das Ventil 28 sychron hierzu, wie oben beschrieben, geöffnet und geschlossen. Gleichzeitig wird der Ultraschallgenerator 54 von der Steuerung 22 eingeschaltet, so daß in die Spülflüssigkeit Ultraschallschwingungen eingeleitet werden. Durch die Kavitationswirkung der Ultraschallschwingungen in der Flüssigkeit und den Durchspülvorgang unter gleichzeitiger Bewegung des Kolbens 33 soll eine gründliche Reinigung der mit der Probe in Berührung kommenden Teile stattfinden.

Bei der bekannten Anordnung hat es sich nun gezeigt, daß die Meßergebnisse relativ weit streuen, und zwar insbesondere in Abhängigkeit sowohl von der Gebrauchsdauer als auch von der Art der untersuchten Substanzen.

Der Erfindung liegt die Aufgabe zugrunde, eine Vorrichtung der eingangs genannten Art dahingehend weiterzubilden, daß eine verbesserte Meßgenauigkeit erzielbar ist.

Diese Aufgabe wird durch die im Patentanspruch 1 angegebenen Merkmale gelöst.

Ein wesentlicher Punkt der Erfindung liegt darin, daß die Ultraschallschwingungen in erhöhtem Maße in die Spülflüssigkeit eingekoppelt werden. Weiterhin können bei der erfindungsgemäßen Anordnung sämtliche Teile, welche mit der Probenflüssigkeit in Verbindung gelangen, aus elektrisch isolierendem Material gebildet sein. Es ist also kein Metallboden notwendig, um die Ultraschallschwingungen in die Spülflüssigkeit einzukoppeln. Dadurch wiederum kann man mit vertretbarem Kostenaufwand die Elektroden aus Edelmetallen, insbesondere aus Platin, fertigen. Dies wiederum verbessert die Meßgenauigkeit, insbesondere verbessert dies die Reproduzierbarkeit der Messungen. Wichtig ist also die Tatsache, daß Zugkräfte wie auch Schubkräfte in das isolierende Material und damit in die Flüssigkeit eingekoppelt werden. Durch die feste Verbindung der Teile - durch Kleben, Sputtern, chemische Beschichtung oder dergleichen - wird dies sichergestellt.

Vorzugsweise werden der Innenabschnitt, der Einfüllabschnitt und das Anschlußstück der Abflußleitung einstückig miteinander ausgebildet. Dadurch werden Abdichtprobleme vermieden.

Wenn der Ultraschallschwinger an den Außenmantel in Höhe des Innenabschnitts, in welchem sich der Kolben mit engem Spalt bewegt, angekoppelt ist, so kann die Reinigungswirkung verbessert werden.

Die Ankupplung des Ultraschallschwingers an den Außenmantel erfolgt vorzugsweise derart, daß die Schwingungen im wesentli chen radial zur Längsachse des Außenmantels in den zylindrischen Innenabschnitt eingekoppelt werden. Vorzugsweise baut man hierbei den Ultraschallschwinger aus zwei im wesentliche identisch ausgebildeten Einzelschwingern auf, die an einande gegenüberliegenden Seiten des Außenmantels befestigt sind. Dadurch ergibt sich in einfacher Weise ein wirksamer Aufbau.

In diesem Fall können auch die Einzelschwinger mittels einer die Einzelschwinger oder den Außenmantel umgebenden Spannbrücke auf dem Außenmantel mit definierbarem Anpreßdruck gehalten werden. Dadurch ist ein sehr hoher Wirkungsgrad bei der Übertragung der Schwingungen von den Piezoschwingungen auf den Außenmantel und in die Flüssigkeit erzielbar.

Der Außenmantel wird im Bereich des Ultraschallschwingers mi Abflachungen ausgestattet, so daß eine feste Ankopplung möglich ist.

Zur Herstellung der so aufgebauten Vorrichtung geht man vorteilhafterweise in folgenden Schritten vor:

Zunächst wird der Außenmantel mit einer definierten Innenkontur hergestellt, z.B. aus einem Metallstück gedreht.

Weiterhin wird ein Innenkörper aus dem isolierenden Material, insbesondere aus Polytetrafluorethylen, mit einer Außenkontur hergestellt, die im wesentlichen der definierten Innenkontur des Außenmantels entspricht.

Nun wird der Innenkörper in den Außenmantel eingeklebt. Bei der Verwendung von Polytetrafluorethylen als Material für den Innenkörper muß hierbei eine in an sich bekannter Weise erfolgende Vorbehandlung des Materials stattfinden.

In einem letzten Schritt wird der in den Außenmantel eingeklebte Innenkörper durch spanabhebende Verformung auf seine End-Innenkontur gebracht. Insbesondere kann in diesem Schritt der zylindrische Innenabschnitt, in welchem sich der Kolben bewegt, sehr dünn ausgedreht werden, so daß die in diesem Bereich eingekoppelten Ultraschallschwingungen nur sehr wenig durch das weichere Kunststoffmaterial gedämpft werden.

Vorzugsweise wird bei der Herstellung der Innenkörper vor dem Einkleben in den Außenmantel schon mit Ausnehmungen ausgestattet, welche derart geformt sind, daß bei der endgültigen Formgebung nur noch eine relativ geringfügige Endbearbeitung erfolgen muß. Die Ausnehmungen werden hierbei so vorgesehen, daß der vorbearbeitete Körper noch eine hinreichende Stabilität aufweist.

Insbesondere ist es von Vorteil, wenn man beim Einarbeiten der Ausnehmungen (vor dem Einkleben) den Einfüllabschnitt und einen Teil der Abflußleitung, nämlich einen Anschlußstutzen für einen Schlauch, schon im wesentlichen fertigstellt.

Durch konische Formung des Probengefäßes und/oder des Kolbens, kann eine Einstellung des spannungsbestimmenden Spaltes bzw. der durch ihn - zusammen mit der Kolbengeschwindigkeit - definierten Strömungsgeschwindigkeit erfolgen.

Bevorzugte Ausführungsformen der Erfindung ergeben sich aus den Unteransprüchen.

Nachfolgend wird ein Ausführungsbeispiel der Erfindung anhand von Abbildungen näher erläutert. Hierbei zeigen:
- Fig. 1: eine Ausführungsform der Erfindung im Längsschnitt,
- Fig. 2: einen Längsschnitt durch den Außenmantel,
- Fig. 2A: eine Draufsicht auf den Außenmantel nach Fig. 2,
- Fig. 3: einen Längsschnitt durch den Innenkörper,
- Fig. 3A: eine Draufsicht auf den Innenkörper nach Fig. 3,
- Fig. 4: einen Längsschnitt durch die zusammengebaute Vorrichtung,
- Fig. 4A: eine Draufsicht auf die Vorrichtung nach Fig. 4,
- Fig. 5: einen Längsschnitt durch den Außenmantel mit angebautem Ultraschallschwinger,
- Fig. 6: einen Schnitt entläng der Linie VI-VI aus Fig. 5 und
- Fig. 7: eine Schemadarstellung der bekannten Vorrichtung.

Bei der nachfolgenden Beschreibung werden die in Fig. 7 erläuterten Teile nicht nochmals im einzelnen beschrieben, soweit sie mit den bekannten Teilen übereinstimmen.

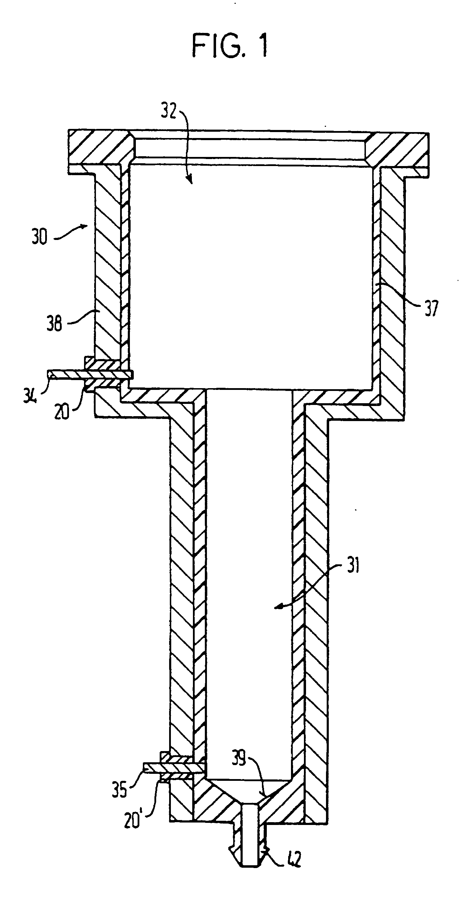

Wie in Fig. 1 gezeigt, umfaßt die erfindungsgemäße Vorrichtung ein Probengefäß 30, dessen Außenmantel 38 im wesentlichen in zwei Durchmesser-verschiedenen Stufen zylindrisch ausgebildet ist.

Im oberen Abschnitt ist ein Einfüllabschnitt 32 größeren Durchmessers gebildet, während im unteren Bereich ein zylindrischer Abschnitt 31 geringeren Durchmessers ausgebildet ist.

Im Inneren des Außenmantels 38 ist ein Isolierkörper 37 vorgesehen, der nicht nur die Seitenwände, sondern auch den Boden 39 des Probengefäßes 30 mitumfaßt. Am Boden 39 ist der Rohrstutzen 42 mitangebracht, an welchem eine (hier nicht gezeigte) Ablaßleitung 29 anschließbar ist.

Im Bereich des Einfüllabschnittes 32, und zwar in etwa an der Stelle des Übergangs zum zylindrischen Abschnitt 31 mit geringerem Durchmesser, ist eine obere Elektrode 34 vorgesehen, die über eine Isolierhülse 20 durch den Außenmantel 38 und den Kunststoffkörper 37 dicht hindurchgeführt ist. Im unteren Bereich ist eine untere Elektrode 35 im Bereich des Bodens 39 vorgesehen, die ebenfalls durch eine Isolierhülse 20' durch den Außenmantel 38 dicht hindurchgeführt ist. Die beiden Elektroden 34, 35 sind aus einem edlen Metall gefertigt bzw. mit einem solchen überzogen.

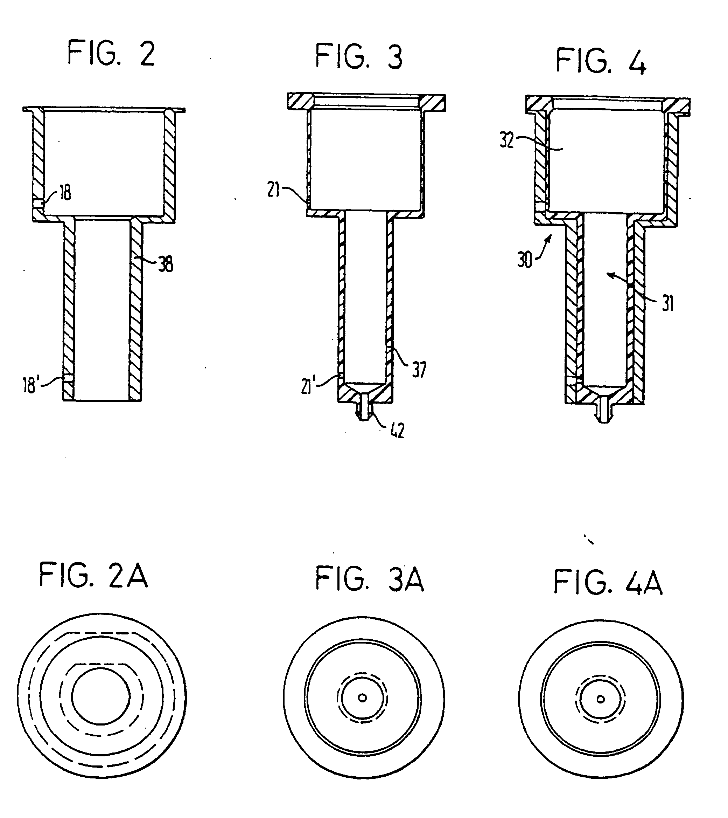

Zur Herstellung des Probengefäßes 30 wird zunächst der Außenmantel 38 wie in Fig. 2/2A gezeigt, hergestellt und mit Bohrungen 18, 18' versehen. Weiterhin wird der Isolierkörper 37 (aus Polytetrafluorethylen) hergestellt, und zwar so, daß seine Außenkonturen den Innenkonturen des Außenmantels 38 entsprechen. Dann wird der Isolierkörper 37 auf seiner Außenfläche vorbehandelt, so daß er mit einem Kleber in den Außenmantel 38 eng eingepaßt und dort festgeklebt werden kann. Das so entstehende Probengefäß 30 (Fig. 4/4A) wird schließlich innen noch ausgedreht, so daß im zylindrischen Abschnitt 31 der Isolierkörper 37 sehr dünnwandig wird. Abschließend wird der Außenmantel 38 im Bereich seines geringeren Durchmessers mit zwei einander gegenüberliegenden Abflachungen versehen, wobei die erste Abflachung auch schon bei der Herstellung des Außenmantels (Fig. 2/2A) vorgesehen werden kann.

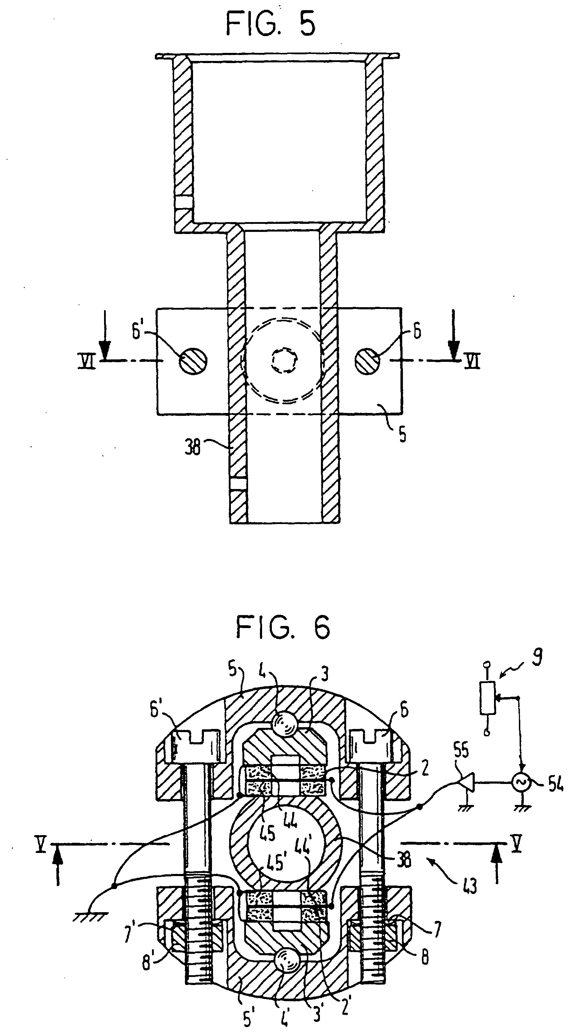

Nachfolgend wird anhand der Figuren 5 und 6 der Aufbau des Ultraschallschwingers 43 näher erläutert.

Der Ultraschallschwinger 43 umfaßt zwei Paare von Piezoringen 44, 45; 44', 45', die unter Zwischenlage einer Kontaktscheibe 2, 2' auf den Außenmantel 38 im Bereich der oben erwähnten Abflachung aufgesetzt sind. Auf ihren gegenüberliegenden Seiten liegen auf den jeweils äußeren Piezoringen 44, 44' Schuhe 3, 3' auf, welche über mittige Lagerkugeln 4, 4' in entsprechenden Lagerausnehmungen in einem oberen und einem unteren Joch 5, 5' sitzen.

Zum Verspannen der beiden Joche 5, 5' gegeneinander sind Schraubbolzen 6, 6' vorgesehen, die über Muttern 8, 8' und dazwischengelegte Federscheiben 7, 7' die beiden Joche 5, 5' miteinander verbinden. Durch diese Art der Anordnung ist gewährleistet, daß der Druck, mit welchem die Piezoringe 44, 44' auf den Außenmantel 38 gedrückt werden, gleichmäßig auf die Oberfläche der Piezoringe verteilt wird. Die Federringe 7, 7' dienen dazu, einen konstanten Anpreßdruck auch bei Temperaturschwankungen sicherzustellen.

Die Piezoringe 44, 45; 44', 45' sind mit dem Verstärker 55 (siehe Fig. 7) in an sich bekannter Weise verbunden. Der Ver stärker 55 wird vom oben schon erwähnten und an sich bekannten Ultraschallgenerator 54 gespeist.

Im Gegensatz zur bekannten Anordnung ist bei der erfindungsgemäßen Vorrichtung ein Frequenzeinstellelement 9 (siehe Fig. 6) vorgesehen, dessen Ausgangssignal dem Schwingungsgenerato 54 zugeführt wird. Dadurch ist es möglich, den Schwingungsge nerator 54 so einzustellen, daß er den Ultraschallschwinger 43 mit einer Frequenz ansteuert, bei welcher eine optimale Reinigung des Probengefäßes erzielt wird. Insbesondere ist es möglich, durch eine entsprechende Einstellung der Frequenz bestimmte, verschmutzungsgefährdete Stellen des Probengefäßes, z.B. den Bereich, in welchem der Kolben 33 läuft oder den Boden 39 besonders intensiv zu reinigen, wenn dies die Art der untersuchten Probe nötig macht. Bei einer weiteren Ausführungsform wird die Frequenz nacheinander auf verschiedene Werte eingestellt, so daß verschiedene Bereiche des Gefäßes nacheinander intensiviert behandelt werden. Ein Frequenzgemisch, umfassend die genannten Einzelfrequenzen, ist ebenfalls mit Vorteil anwendbar. Falls der Schwingungsgenerator 54 in einer Rückkopplungsschleife zum Beispiel über einer am Außenmantel 38 angebrachten Schwingungsfühler (nicht gezeigt) betrieben wird, so können die bestimmten Einzelfrequenzen mittels elektrischer Filter in der Schleife selektiert und der Probe bzw. dem Probengefäß angepaßt werden.

### Bezugszeichenliste

- 2: Kontaktscheibe
- 3: Schuh
- 4: Lagerkugel
- 5: Joch
- 6: Schraubbolzen
- 7: Federscheibe
- 8: Mutter
- 9: Einstellelement
- 18: Bohrung
- 19: Entnahmeleitung
- 20: Isolierhülse
- 21: Bohrung
- 22: Steuerung
- 24: Titerleitung
- 25: Titerventil
- 26: Spülleitung
- 27: Spülventil
- 28: Ablaßventil
- 29: Ablaßleitung
- 30: Probengefäß
- 31: zylindrischer Abschnitt
- 32: Einfüllabschnitt
- 33: Kolben
- 34: erste Elektrode
- 35: zweite Elektrode
- 36: Ringkerbe
- 37: Isoliereinsatz
- 38: Außenmantel
- 39: Boden
- 40: Hornabschnitt
- 41: Kerbe
- 42: Rohrstutzen
- 43: Ultraschallschwinger
- 44: Piezoring
- 45: Piezoring
- 46: Elektrode
- 47: Gegenring
- 48: Schraubbolzen
- 49: Schaft
- 50: Antrieb
- 51: Kurbel
- 52: Motor
- 53: Drehwinkelgeber
- 54: Ultraschallgenerator
- 55: Ultraschalltreiber
- 56: Ladungsverstärker
- 57: Motortreiber
- 58: Meßeinrichtung

## Patentansprüche

1. Vorrichtung zur automatisierten Polyelektrolytbestimmung, insbesondere in Prozessstoffen, umfassend ein Probengefäß (30) mit einem Außenmantel (38), einem vertikal angeordneten zylindrischen Innenabschnitt (31) aus isolierendem Material, der mit dem Außenmantel (38) mindestens schubfest verbunden ist, und einem darüberliegenden, anschließenden Einfüllabschnitt (32) größeren Durchmessers aus isolierendem Material im Außenmantel (38), Elektroden (34, 35) im Bereich der Enden des zylindrischen Innenabschnitts (31), einem elektrisch isolierenden Kolben (33), der relativ zum zylindrischen Innenabschnitt (31) motorisch auf- und abbewegbar ist, mit Einrichtungen (56) zur Messung einer Ladungsverschiebung zwischen den Elektroden (34, 35), einer Abflussleitung (29, 42), die an einem Boden des Innenabschnitts (31) mündet und einen Ultraschallschwinger (43), der mit dem Probengefäß (30) mechanisch gekoppelt und während eines Spülvorgangs derart mittels eines Schwingungsgenerator (54, 55) ansteuerbar ist, dass Ultraschallschwingungen in eine Spülflüssigkeit einkoppelbar sind,
**dadurch gekennzeichnet, dass**
der Innenabschnitt (31) und/oder der darüberliegende Einfüllabschnitt (32) mit dem Außenmantel (38) zug- und schubfest verbunden ist/sind, der Ultraschallschwinger (43) an den Außenmantel (38) angekoppelt ist, und dass Einrichtungen (9) zum Einstellen der Ausgangsfrequenz des Schwingungsgenerators in Abhängigkeit von einer zu untersuchenden Probe vorgesehen sind.

2. Vorrichtung nach Anspruch 1,
**dadurch gekennzeichnet,**
**daß** der zylindrische Innenabschnitt (31) und der Einfüllabschnitt (32) zusammen mit einem Rohrstutzen (42) der Abflußleitung einstückig ausgebildet sind.

3. Vorrichtung nach einem der vorhergehenden Ansprüche,
**dadurch gekennzeichnet,**
**daß** der Ultraschallschwinger (43) an den Außenmantel (38) in Höhe des zylindrischen Innenabschnitts (31) angekoppelt ist.

4. Vorrichtung nach einem der vorhergehenden Ansprüche,
**dadurch gekennzeichnet,**
**dass** der Ultraschallschwinger (43) an den Außenmantel (38) angekoppelt ist, so dass die Schwingungen im wesentlichen radial zur Längsachse des zylindrischen Innenabschnitts (31) eingekoppelt werden.

5. Vorrichtung nach Anspruch 1,
**dadurch gekennzeichnet,**
**daß** der Innenabschnitt (31) in den Außenmantel (38) eingeklebt ist.

6. Vorrichtung nach Anspruch 1,
**dadurch gekennzeichnet,**
**daß** der Innenabschnitt (31) als Beschichtung in den Außenmantel (38) eingebracht ist.

## Claims

1. An apparatus for automated polyelectrolyte determination, in particular in process materials, comprising a sample vessel (30) with an outer casing (38), with a vertically arranged cylindrical inner portion (31) of insulating material, which is connected to the outer casing (38) at least in a shear-resistant manner, and with a superposed adjacent filling portion (32) of larger diameter and consisting of insulating material in the outer casing (38), with electrodes (34,35) in the vicinity of the ends of the cylindrical inner portion (31), with an electrically insulating piston (33) which can be moved up and down relative to the cylindrical inner portion (31) by a motor, with means (56) for measuring a charge transfer between the electrodes (34,35), a drain duct (29,42) which discharges at the bottom of the inner portion (31) and an ultrasonic vibrator (43) which is mechanically coupled to the sample vessel (30) and during a flushing operation can be so actuated by means of a vibration generator (54,55) that ultrasonic vibrations can be coupled into a flushing fluid, **characterised in that**
the inner portion (31) and/or the superposed filling portion (32) is/are connected to the outer casing (38) in a tension-resistant and shear-resistant manner, the ultrasonic vibrator (43) is coupled to the outer casing (38), and **in that** means (9) are provided for adjusting the output frequency of the vibration generator as a function of a sample to be investigated.

2. An apparatus according to Claim 1, **characterised in that** the cylindrical inner portion (31) and the filling portion (32) are formed in one piece together with a pipe connector (42) of the drain duct.

3. An apparatus according to any one of the preceding Claims, **characterised in that** the ultrasonic vibrator (43) is coupled to the outer casing (38) at the level of the cylindrical inner portion (31).

4. An apparatus according to any one of the preceding Claims, **characterised in that** the cylindrical inner portion (31) is coupled to the outer casing (38) so that the vibrations are coupled substantially radially to the longitudinal axis of the cylindrical inner portion (31).

5. An apparatus according to Claim 1, **characterised in that** inner portion (31) is glued into the outer casing (38).

6. An apparatus according to Claim 1, **characterised in that** inner portion (31) is incorporated into the outer casing (38) as a coating.

## Revendications

1. Dispositif pour la détermination automatisée de polyélectrolytes, en particulier dans des substances de processus, comprenant un récipient d'échantillonnage (30) avec une enveloppe extérieure (38), une section intérieure (31) cylindrique disposée verticalement en matériau isolant, qui est reliée à l'enveloppe extérieure (38) au moins de façon résistante au cisaillement, et une section de remplissage (32) consécutive sus-jacente de diamètre supérieur en matériau isolant dans l'enveloppe extérieure (38), des électrodes (34, 35) dans la zone des extrémités de la section intérieure cylindrique (31), un piston (33) isolant électriquement, qui peut être animé d'un mouvement de montée et de descente motorisé par rapport à la section intérieure cylindrique (31), avec des dispositifs (56) pour la mesure d'un transfert de charge entre les électrodes (34, 35), une conduite d'évacuation (29, 42) qui débouche sur un fond de la section intérieure (31), et un oscillateur ultrasonore (43) qui est couplé mécaniquement au récipient d'échantillonnage (30) et peut être attaqué pendant une opération de lavage au moyen d'un générateur de vibrations (54, 55) de telle sorte que des vibrations ultrasonores peuvent être injectées dans un liquide de lavage,
**caractérisé en ce que**
la section intérieure (31) et/ou la section de remplissage (32) sus-jacente est/sont reliée/s à l'enveloppe extérieure (38) de façon résistante à la traction et au cisaillement, l'oscillateur ultrasonore (43) est couplé à l'enveloppe extérieure (38), et que des dispositifs (9) sont prévus pour régler la fréquence de sortie du générateur de vibrations en fonction d'un échantillon à analyser.

2. Dispositif suivant la revendication 1,
**caractérisé en ce**
**que** la section intérieure cylindrique (31) et la section de remplissage (32) sont réalisées d'une seule pièce avec une tubulure (42) de la conduite d'évacuation.

3. Dispositif suivant l'une des revendications précédentes,
**caractérisé en ce**
**que** l'oscillateur ultrasonore (43) est couplé à l'enveloppe extérieure (38) à la hauteur de la section intérieure cylindrique (31).

4. Dispositif suivant l'une des revendications précédentes,
**caractérisé en ce**
**que** l'oscillateur ultrasonore (43) est couplé à l'enveloppe extérieure (38), de telle sorte que les vibrations sont injectées essentiellement radialement par rapport à l'axe longitudinal de la section intérieure cylindrique (31).

5. Dispositif suivant la revendication 1,
**caractérisé en ce**
**que** la section intérieure (31) est collée dans l'enveloppe extérieure (38).

6. Dispositif suivant la revendication 1,
**caractérisé en ce**
**que** la section intérieure (31) est introduite sous forme de revêtement dans l'enveloppe extérieure (38).
